# DEMANDE DE BREVET EUROPEEN

(11) **EP 0 815 723 A1**
(43) Date de publication de la demande: **07.01.1998**
(21) Numéro de dépôt: 97401537.2
(22) Date de dépôt: 01.07.1997
(51) Int. Cl.: A01K 1/00

(54) **Case d'élevage pour animaux**

(30) Priorité: 05.07.1996 FR 9608428
(71) Demandeur: Aco Produits Polymères, 27940 Notre Dame de L'Isle (FR)
(72) Inventeur: Bertet, Jean-Jacques, 27120 Pacy Sur Eure (FR); Laporte, Philippe, 27620 Gasny (FR); Miquel, Joseph, 27950 Saint Pierre D'Autils (FR)
(74) Mandataire: Bezault, Jean

(57) **Abrégé**

L'invention concerne une case d'élevage pour animaux.

La case comprend un portillon (1) ayant deux montants verticaux (8) montés espacés et formés chacun d'un profilé obtenu à partir d'un matériau composite dit "pultrudé", l'un au moins des deux montants (8) étant relié par des articulations (3, 4) à un panneau support (2).

L'invention permet de réaliser des cases d'élevage qui peuvent être facilement adaptées aux dimensions souhaitées par l'utilisateur et qui sont particulièrement résistantes aux chocs et à la corrosion, offrant ainsi un maximum de sécurité.

## Description

L'invention concerne une case destinée à l'élevage d'animaux, tels que des porcs, des veaux, etc.

La case d'élevage de l'invention est du type comprenant un portillon ayant deux montants verticaux espacés supportant un panneau de porte, l'un au moins des deux montants étant relié par des articulations à un panneau support.

On connaît déjà des cases d'élevage de ce type, dans lesquelles le portillon est disposé généralement entre deux panneaux support formant façade le long d'un couloir de circulation dans un bâtiment d'élevage. Habituellement, une telle case d'élevage est en outre délimitée par deux cloisons latérales qui s'étendent chacune perpendiculairement au couloir de circulation, entre un panneau support de façade et un mur du bâtiment d'élevage.

Dans les cases connues de ce type, les panneaux support ainsi que les cloisons latérales sont généralement fixés à un caillebotis qui constitue le plancher de la case et qui est situé au-dessus d'une fosse à lisier.

Les différents éléments constituant une telle case doivent pouvoir être adaptés facilement aux dimensions souhaitées et permettre en même temps un ajustement précis, notamment pour permettre un fonctionnement correct du portillon.

Généralement, le portillon est muni de deux paires d'articulations séparables ou dégondables, en sorte qu'il peut pivoter au choix par rapport à l'un ou l'autre des deux panneaux support formant façade du côté du couloir de circulation.

Ces cases d'élevage et en particulier leurs portillons doivent satisfaire un certain nombre de conditions.

Tout d'abord, il faut qu'elles présentent une résistance élevée aux chocs et à la corrosion.

Il faut en outre qu'elles présentent toutes les sécurités suffisantes pour que l'éleveur soit sûr que le portillon est bien verrouillé et qu'il ne puisse pas être ouvert de façon intempestive par les animaux.

Par ailleurs, il est nécessaire que ces cases d'élevage puissent être adaptées facilement sur leurs sites d'implantation, et cela à partir d'éléments standards.

On connaît déjà des cases d'élevage de ce type dans lesquelles les montants du portillon sont des cornières en acier inoxydable dotées de perforations servant à la fixation du panneau de porte ainsi qu'à la fixation de pattes faisant partie des articulations et propres à coopérer avec des gonds fixés sur les panneaux support.

Toutefois, ces cornières en acier inoxydable sont d'un prix élevé et la réalisation des articulations nécessite des opérations de fixation et de réglage des pattes d'articulation sur les cornières. Ceci complique la réalisation des portillons.

Par ailleurs, si les pattes d'articulation ne sont pas réglées dans une position précise, l'articulation du portillon peut être défectueuse, d'où il résulte un défaut de sécurité.

L'invention a notamment pour but de surmonter les inconvénients précités.

Elle propose à cet effet une case d'élevage du type défini en introduction, dans laquelle les montants verticaux du portillon sont formés chacun d'un profilé obtenu à partir d'un matériau composite dit "pultrudé". La technique de pultrusion est une technique qui se rapproche de celle de l'extrusion et qui fait appel à des armatures en fils ou tissus de verre ou de carbone. Ces armatures sont imprégnées d'une résine dans un bac, puis conformées avant d'être tirées au travers d'une filière.

La technique de pultrusion permet de réaliser des profilés ayant une résistance mécanique très élevée et avec une multiplicité de formes, pleines ou creuses.

Les montants en matériau composite "pultrudé" du portillon de l'invention offrent une résistance élevée aux chocs et à la corrosion.

En outre, ils présentent l'avantage de permettre la fixation d'éléments d'articulation à partir de vis ou analogues, ce qui évite la nécessité de recourir à des opérations de réglage comme dans la technique antérieure.

Avantageusement, chacun des montants verticaux du portillon est un profilé en forme de cornière.

Ces montants verticaux comportent avantageusement des rainures servant de repères de perçage, soit pour la fixation d'un panneau de porte, soit pour la fixation d'éléments d'articulation.

En outre, ces montants verticaux peuvent être utilisés non seulement pour des portillons, mais aussi pour d'autres parties d'une case d'élevage.

Dans une forme de réalisation préférée de l'invention, les deux montants verticaux du portillon sont reliés chacun à un panneau support par des articulations séparables ou dégondables, en sorte que le portillon peut pivoter au choix par rapport à l'un ou l'autre des panneaux support.

Selon une autre caractéristique de l'invention, chaque articulation comporte un gond propre à être fixé à un panneau support ou à un montant du portillon, ainsi qu'une platine propre à être fixée à un montant du portillon ou respectivement un panneau support, cette platine comportant un trou oblong pour le passage du gond.

De préférence, le gond est fixé à un panneau support et la platine est fixée à un montant du portillon.

Ainsi, lorsque le portillon pivote autour d'articulations reliant un montant vertical du portillon à un panneau support, les autres articulations sont dégondées et servent d'éléments de fermeture, lorsque les platines correspondantes viennent en coopération avec les gonds correspondants.

Avantageusement, une au moins des platines est munie d'un verrou de blocage déplaçable entre une position de verrouillage où la platine reste engagée dans le gond et une position de déverrouillage où la platine peut être dégagée du gond.

Ce verrou est avantageusement réalisé sous la forme d'une poignée pivotante.

Selon une autre caractéristique avantageuse de l'invention, le gond et la platine sont des pièces formées à partir de polyamide et de fibres de verre.

Ces pièces possèdent également une résistance élevée aux chocs et à la corrosion. Elles peuvent en outre être fixées facilement sur montant de portillon ou sur un panneau support par des moyens de fixation du type vis-écrou, et cela en des endroits précis.

Le verrou est avantageusement réalisé en polyamide.

Dans l'invention, chaque panneau support est de préférence formé à partir d'un béton de résine, en particulier un béton polyester.

On peut ainsi réaliser par moulage un panneau support extrêmement résistant et avec des dimensions très précises.

Selon une autre caractéristique de l'invention, la case d'élevage comprend en outre au moins une cloison latérale qui s'étend perpendiculairement à un panneau support.

Avantageusement, cette cloison latérale est formée de lisses horizontales, par exemple en matière plastique du type PVC, fixées à des poteaux verticaux constitués par des profilés obtenus à partir d'un matériau composite dit "pultrudé".

Ce matériau composite est avantageusement le même que celui utilisé pour les montants du portillon. A titre d'exemple, le matériau composite pultrudé peut comprendre une résine polyester isophtalique et des fibres de verre.

Les poteaux verticaux faisant partie d'une cloison latérale peuvent être des profilés en forme de cornières ou des profilés plats.

Dans la description qui suit, donnée seulement à titre d'exemple, on se réfère aux dessins annexés, sur lesquels :
- la figure 1 est une vue en perspective de deux cases d'élevage pour animaux selon l'invention;
- la figure 2 est une vue partielle de face du portillon et d'un panneau support;
- la figure 3 est une vue de côté correspondant à la figure 2;
- la figure 4 est une vue de dessus d'une articulation;
- la figure 5 est un détail de la figure 3;
- la figure 6 est une vue d'extrémité d'un montant vertical en matériau composite dit "pultrudé";
- la figure 7 illustre l'utilisation du montant de la figure 6 dans un portillon;
- la figure 8 illustre l'utilisation au montant de la figure 6 dans une cloison latérale; et
- la figure 9 est une vue d'extrémité d'un montant vertical, en forme de profilé plat, propre à être utilisé dans une cloison latérale de la case d'élevage; et
- la figure 10 illustre l'utilisation du montant de la figure 9 dans une cloison latérale d'une case d'élevage.

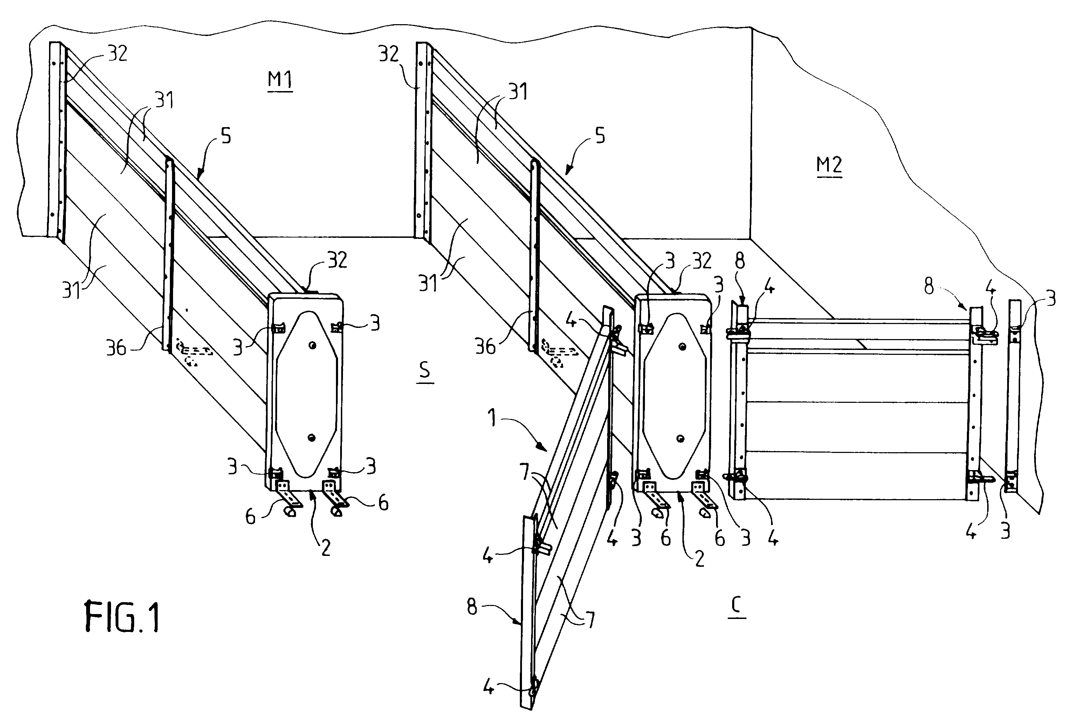

On se réfère tout d'abord à la figure 1 qui représente (côté gauche de la figure) une case d'élevage pour animaux qui comprend un portillon 1 (représenté en position ouverte) propre à être relié à l'un ou l'autre de deux panneaux support 2 par des articulations séparables ou dégondables comprenant chacune un gond 3 fixé sur un panneau support 2 et une platine 4 fixée sur le portillon 1. A droite de la case d'élevage se trouve une autre case d'élevage comprenant également un portillon 1 (représenté en position fermée).

Les panneaux support 2 sont des panneaux verticaux, de forme générale rectangulaire, alignés entre eux et formant façade le long d'un couloir de circulation C.

La case comprend en outre deux cloisons latérales 5 disposées verticalement et s'étendant chacune entre un panneau support 2 et un mur M1 faisant partie d'un bâtiment d'élevage. La case d'élevage située du côté droit est délimitée par l'une des cloisons 5 et par un mur M2.

Les composants de la case sont fixés sur un sol S en caillebotis situé au-dessus d'une fosse à lisier (non représentée).

Les panneaux support 2 sont des panneaux de forme générale rectangulaire réalisés avantageusement par moulage à partir d'un béton de résine, c'est-à-dire d'un béton polymère, en particulier du type polyester, composé d'un liant en résine naturelle ou synthétique et de charges minérales.

Habituellement, la résine peut être du type polyester, vinyl ester, méthacrylate ou époxy. Les charges de base sont habituellement des poudres et agrégats minéraux.

Chacun des panneaux support 2 est fixé au sol S en caillebotis par l'intermédiaire d'équerres 6 et de dispositifs de fixation qui peuvent être du type décrit dans le Brevet français No 95 03769 au nom de la Demanderesse.

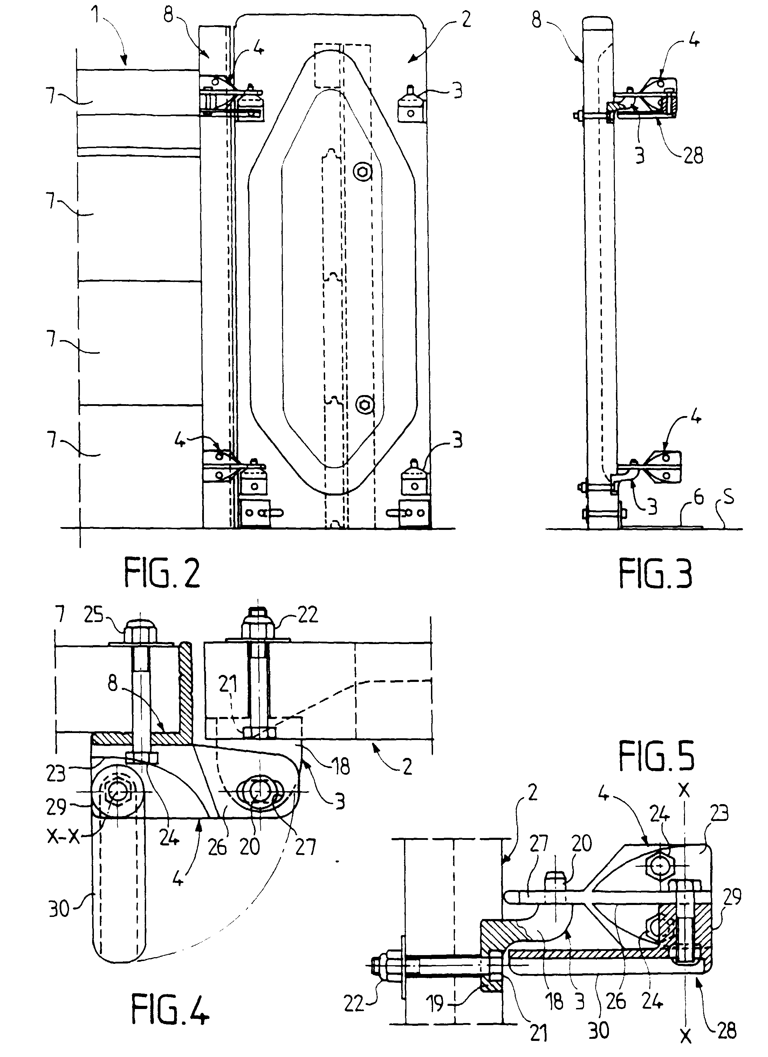

Le portillon 1 comprend un panneau de porte formé à partir d'une série de profilés 7 en matière plastique, par exemple en PVC, disposés horizontalement et fixés à leurs deux extrémités à deux montants verticaux 8 formés chacun d'un profilé en forme de cornière obtenu à partir d'un matériau composite dit "pultrudé" (figures 1 et 2). Ce matériau est avantageusement formé d'une résine polyester isophtalique armée de fibres de verre.

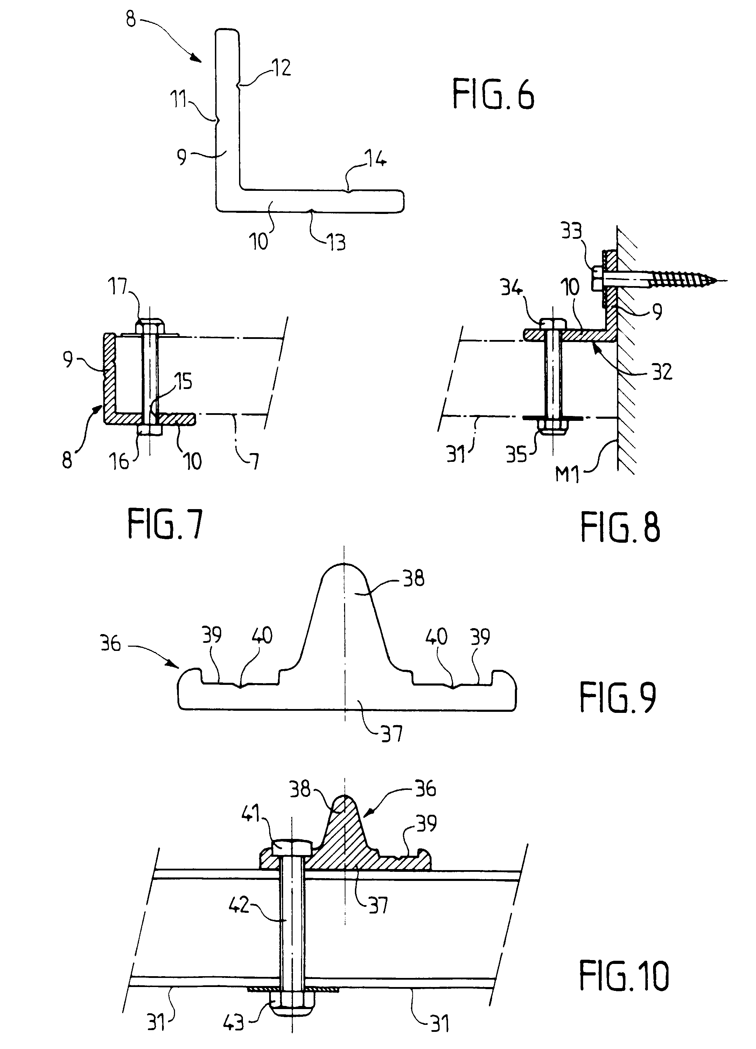

Chacun des montants 8 comprend (figure 6) deux ailes 9 et 10 reliées entre elles à 90° et comportant des rainures 11 et 12 sur deux faces opposées de l'aile 9 et deux autres rainures 13 et 14 sur deux faces opposées de l'aile 10. Les rainures 11 à 14 servent de repères de perçage, notamment pour la fixation des lisses 7 du portillon, comme on le voit à la figure 8. Ainsi, on peut réaliser des perçages 15 à partir de la rainure 13 (figure 7), ce qui permet de placer une vis 16 traversant une des lisses 7 et recevant un écrou 17.

On verra plus loin que le montant 8 en forme de cornière peut être utilisé aussi dans la réalisation des cloisons 5.

Comme on le voit plus particulièrement sur les figures 4 et 5, chacun des gonds 3 comprend une partie 18 en forme d'équerre destinée à être logée dans une empreinte en creux 19 de forme correspondante réalisée par moulage dans le panneau support 2. L'équerre 18 se prolonge par un tourillon 20. Le gond 3 dans son ensemble est réalisé à partir d'un polyamide armé de fibres de verre. Le gond 3 est fixé sur le panneau support 2 par l'intermédiaire d'une vis 21 qui traverse l'épaisseur du panneau et d'un écrou 22. Chacun des panneaux 2 comprend quatre empreintes 19, ce qui permet de fixer deux paires de gonds 3, et cela en des endroits rigoureusement précis.

Comme on le voit plus particulièrement sur les figures 4 et 5, chacune des platines 4 comprend une embase 23 propre à être fixée sur le portillon par l'intermédiaire de deux vis 24 qui traversent successivement l'embase 23, une des ailes d'un montant 8 et une lisse 7 du panneau de porte avant de recevoir un écrou 25.

L'embase 23 est raccordée perpendiculairement à une patte 26 munie d'un trou oblong 27 propre à coopérer, de façon amovible, avec un tourillon 20 d'un gond 3.

Par ailleurs, chacune des deux platines 4 situées en partie supérieure du portillon est munie d'un verrou 28 comprenant un fût 29 monté à rotation sur la plaque 26 autour d'un axe X-X (figures 4 et 5) et une poignée 30 qui s'étend perpendiculairement au fût 29. La poignée 30 peut être déplacée vers une position de verrouillage comme représenté à la figure 5, dans laquelle la poignée s'étend parallèlement à la plaque 26 et le gond 3 est maintenu prisonnier entre la plaque 26 et la poignée 30, le tourillon 20 étant engagé dans la fente oblongue 27.

La poignée peut être également déplacée dans une position de déverrouillage, comme montré à la figure 4, dans laquelle elle se trouve écartée de la plaque 26.

Comme on peut le voir sur les figures 1 et 2, les deux platines 4 prévues en partie supérieure du portillon 1 sont pourvues chacune d'un verrou 28. Par contre, les deux platines placées en partie inférieure sont dépourvues de poignées.

On comprendra que le portillon 1 peut pivoter au choix, soit par rapport au panneau 2 représenté à droite, comme c'est le cas sur la figure 1, soit par rapport au panneau 2 représenté à gauche. Ainsi, dans la forme de réalisation de la figure 1, le verrou 28 situé du côté droit doit être maintenu en position verrouillée pour que le portillon puisse pivoter par rapport au panneau support 2 représenté à droite. Pour amener ensuite le portillon en position fermée, il suffit de rapprocher le montant 8, situé à gauche, du panneau 2 situé à gauche, de le soulever légèrement pour que les deux platines 28 puissent s'engager dans les gonds 3 du panneau 2 situé à gauche. Après engagement, on laisse retomber légèrement l'extrémité gauche du portillon et on déplace le verrou 28 situé à gauche pour l'amener dans sa position de verrouillage.

Il est à noter que la manoeuvre du portillon, ainsi que le verrouillage ou le déverrouillage d'un verrou 28 peuvent s'effectuer d'une seule main.

De préférence, chaque verrou est en une couleur vive, par exemple rouge, pour que l'éleveur puisse vérifier rapidement, d'un coup d'oeil, si tous les portillons sont correctement fermés.

Chacune des platines 4 est avantageusement réalisée dans le même matériau que le gond, c'est-à-dire en polyamide chargée de fibres de verre.

Par contre, chacun des verrous 28 peut être simplement réalisé en polyamide.

Du fait que les gonds 3 sont fixés dans des empreintes des panneaux 2 et que les platines 4 sont fixées grâce à des perçages réalisés dans les montants 8 suivant des rainures formant repères de perçage, on assure à chaque fois un dimensionnement précis.

Il est à noter que les profilés 7 du panneau du portillon peuvent être coupés à la longueur voulue en fonction de la largeur souhaitée pour le portillon, ce qui permet d'adapter la dimension du portillon en fonction des souhaits de l'utilisateur.

Les cloisons latérales 5 (figure 1) sont formées chacune de lisses 31 en matière plastique, par exemple en PVC, à partir de profilés coupés à la longueur voulue. Les profilés 31 sont fixés, à une extrémité, à un panneau support 2 par l'intermédiaire d'un poteau vertical 32 et, du côté du mur M1, par un autre poteau vertical 32. Les poteaux 32 sont avantageusement réalisés à partir d'un profilé 8 en forme de cornière, réalisé en matériau pultrudé, analogue à ceux utilisés dans les portillons 1.

Là encore, les rainures 11, 12, 13 et 14 peuvent servir de guides de perçage pour la fixation des profilés 31 sur les poteaux 32 et pour la fixation des poteaux 32 sur les panneaux support 2 et le mur M1.

La figure 8 montre la fixation d'un poteau 32, en forme de cornière, au mur M1 par l'intermédiaire d'une vis 33 et la fixation des lisses 31 par l'intermédiaire d'une vis 34 et d'un écrou 35.

Par ailleurs, les lisses 31 (figure 1) sont fixées en partie intermédiaire d'une cloison 5 par un montant vertical 36 réalisé sous la forme d'un profilé plat comme montré à la figure 9. Le profilé 36 est avantageusement réalisé dans le même matériau composite dit "pultrudé" que les montants ou poteaux décrits précédemment. Le profilé 36 comprend une aile 37 dont dépend une nervure de rigidification 38. L'aile 37 comporte deux rainures parallèles et symétriques 39 munies chacune d'une rainure centrale 40 servant de guide de perçage.

Comme on le voit sur la figure 10, les rainures 39 servent d'emplacement à une tête 41 d'une vis 42 qui traverse un profilé 31 et qui reçoit ensuite un écrou de serrage 43 à son extrémité filetée.

Le profilé 36 possède un profil sans contre-dépouilles et à faces accessibles, ce qui facilite le nettoyage sous haute pression

L'invention permet ainsi de réaliser une case d'élevage qui peut être facilement adaptée aux dimensions souhaitées par l'utilisateur et qui présente une résistance élevée aux chocs et à la corrosion et offre une excellente sécurité.

Bien entendu, l'invention n'est pas limitée à la forme de réalisation décrite précédemment à titre d'exemple et s'étend à d'autres variantes.

## Revendications

1. Case d'élevage pour animaux, comprenant un portillon (1) ayant deux montants verticaux espacés (8) supportant un panneau de porte (7), l'un au moins des deux montants verticaux (8) étant relié par-des articulations (3, 4) à un panneau support (2),
caractérisée en ce que les montants verticaux (8) du portillon (1) sont formés chacun d'un profilé obtenu à partir d'un matériau composite dit "pultrudé".

2. Case d'élevage selon la revendication 1, caractérisée en ce que chacun des montants verticaux (8) du portillon (1) est un profilé en forme de cornière.

3. Case d'élevage selon l'une des revendications 1 et 2, caractérisée en ce que chacun des montants verticaux (8) comporte des rainures (11 à 14) servant de repères de perçage.

4. Case d'élevage selon l'une des revendications 1 à 3, caractérisée en ce que les deux montants verticaux (8) du portillon (1) sont reliés chacun à un panneau support (2) par des articulations séparables ou dégondables (3, 4), en sorte que le portillon (1) peut pivoter au choix par rapport à l'un ou l'autre des panneaux supports (2).

5. Case d'élevage selon l'une des revendications 1 à 4, caractérisée en ce que chaque articulation comporte un gond (3) propre à être fixé à un panneau support (2) ou à un montant (8) du portillon (1), et une platine (4) propre à être fixée à un montant (8) du portillon (1) ou respectivement à un panneau support (2), et comportant un trou oblong (27) pour le passage du gond.

6. Case d'élevage selon la revendication 5, caractérisée en ce que la platine (4) est munie d'un verrou de blocage (28) déplaçable entre une position de verrouillage où la platine (4) reste engagée dans le gond et une position de déverrouillage où la platine (4) peut être dégagée du gond (3).

7. Case d'élevage selon la revendication 6, caractérisée en ce que le verrou (28) comprend une poignée pivotante (30).

8. Case d'élevage selon l'une des revendications 5 et 6, caractérisée en ce que le gond (3) et la platine (4) sont des pièces formées de polyamide et de fibres de verre.

9. Case d'élevage selon la revendication 7, caractérisée en ce que le verrou (28) est en polyamide.

10. Case d'élevage selon l'une des revendications 1 à 9, caractérisée en ce que chaque panneau support (2) est en béton de résine, en particulier en béton de polyester.

11. Case d'élevage selon l'une des revendications 1 à 10, caractérisée en ce qu'elle comprend en outre au moins une cloison latérale (5) qui s'étend perpendiculairement à un panneau support (2).

12. Case d'élevage selon la revendication 11, caractérisée en ce que la cloison latérale (5) est formée de lisses horizontales (31), par exemple en matière plastique du type PVC, fixées à des poteaux verticaux (32, 36) constitués par des profilés obtenus à partir d'un matériau composite dit "pultrudé".

13. Case d'élevage selon la revendication 12, caractérisée en ce que l'un au moins des poteaux verticaux (36) comprend deux rainures parallèles (39) propres à servir chacune de logement à au moins une tête (41) d'une vis (42), chacune des rainures (39) comportant une rainure centrale (40) servant de guide de perçage.

14. Case d'élevage selon l'une des revendications 1 et 12, caractérisée en ce que le matériau composite dit "pultrudé" comprend une résine polyester isophtalique armée de fibres de verre.
